# EUROPÄISCHE PATENTSCHRIFT

(11) **EP 2 197 655 B1**
(45) Veröffentlichungstag und Bekanntmachung des Hinweises auf die Patenterteilung: **08.05.2019**
(21) Anmeldenummer: 08784321.5
(22) Anmeldetag: 08.07.2008
(51) Int. Cl.: B29C 49/08, B29C 49/00, B29C 49/06

(54) **VERFAHREN ZUR HERSTELLUNG VON POUCHES SOWIE BLASGEFORMTER POUCH**
METHOD FOR THE PRODUCTION OF POUCHES, AND BLOW-MOULDED POUCH
PROCÉDÉ DE FABRICATION D'UN SACHET ET SACHET MOULÉ PAR SOUFFLAGE

(30) Priorität: 25.07.2007 DE 102007034786
(43) Veröffentlichungstag der Anmeldung: 23.06.2010
(73) Patentinhaber: KHS Corpoplast GmbH, 22145 Hamburg (DE)
(72) Erfinder: MATTHIESEN, Martin, 22359 Hamburg (DE); DREHER, Uwe, 21493 Schwarzenbek (DE); GERNHUBER, Matthias, 22527 Hamburg (DE)
(74) Vertreter: Hausfeld, Norbert
(86) Internationale Anmeldenummer: PCT/DE2008/001135
(87) Internationale Veröffentlichungsnummer: WO 2009/012749

(56) Entgegenhaltungen:
- EP-A- 0 767 046
- JP-A- 2002 080 021
- US-A- 4 497 855

## Beschreibung

Die Erfindung betrifft ein Verfahren zur Herstellung eines Pouches, der einen verschließbaren Mündungsabschnitt, eine Seitenwandung sowie einen verschlossenen Boden besitzt.

Die Erfindung betrifft darüber hinaus einen Pouch, der einen verschließbaren Mündungsabschnitt, eine Seitenwandung sowie einen verschlossenen Boden besitzt.

Derartige Pouches werden häufig zur Verpackung von Lebensmitteln, insbesondere von Getränken, verwendet. Typischerweise besitzt ein derartiger Pouch eine dünne und flexible Wandung, die Konturänderungen des verpackten Produktes ermöglicht. Insbesondere bei in derartigen Pouches verpackten Getränken ist es dadurch möglich, diese wesentlich raumsparender zu transportieren und zu lagern, als dies bei konturstabilen Flaschen möglich wäre. Bei einer Stapelung von Pouches in Kisten oder ähnlichen Gebinden kann durch die jeweilige Konturanpassung der Pouches eine Stapelung mit geringen Zwischenraumbereichen vorgenommen werden.

Aufgrund ihrer relativ geringen Wandstärken sind die Pouches darüber hinaus preiswert in der Herstellung und verursachen nach ihrer Verwendung nur geringe Abfallmengen.

Die Gestaltung derartiger Pouches wird beispielsweise in der WO 2004/092029 beschrieben. Eine Erläuterung von Pouches als Innenbehälter von Kartonverpackungen findet sich in der EP 1 543 939.

Pouches werden verbreitet derart hergestellt, daß ein vorgefertigtes Mündungsstück mit einem folienartigen Seitenwand- und Bodenmaterial versehen wird. Die Verbindung mit dem Mündungsstück sowie die Herstellung eines geschlossenen Behälters aus dem Folienmaterial erfolgt in der Regel durch Schweißvorgänge.

Bei den ebenfalls bereits bekannten Blasvorgängen zur Herstellung von Pouches entstehen Behälter, die auch bei einer vorgesehenen Verwendung nur eine geringe Konturstabilität besitzen und hierdurch einer Abstützung bedürfen. Die Abstützung kann beispielsweise durch Einsetzen in eine Kartonverpackung oder durch Verwendung separater Stützelemente erfolgen.

Bei einer Behälterformung durch Blasdruckeinwirkung werden Vorformlinge aus einem thermoplastischen Material, beispielsweise Vorformlinge aus PET (Polyethylenterephthalat), innerhalb einer Blasmaschine unterschiedlichen Bearbeitungsstationen zugeführt. Typischerweise weist eine derartige Blasmaschine eine Heizeinrichtung sowie eine Blaseinrichtung auf, in deren Bereich der zuvor temperierte Vorformling durch biaxiale Orientierung zu einem Behälter expandiert wird. Die Expansion erfolgt mit Hilfe von Druckluft, die in den zu expandierenden Vorformling eingeleitet wird. Der verfahrenstechnische Ablauf bei einer derartigen Expansion des Vorformlings wird in der DE-OS 43 40 291 erläutert. Die einleitend erwähnte Einleitung des unter Druck stehenden Gases umfaßt auch die Druckgaseinleitung in die sich entwickelnde Behälterblase sowie die Druckgaseinleitung in den Vorformling zu Beginn des Blasvorganges.

Der grundsätzliche Aufbau einer Blasstation zur Behälterformung wird in der DE-OS 42 12 583 beschrieben. Möglichkeiten zur Temperierung der Vorformlinge werden in der DE-OS 23 52 926 erläutert.

In der EP A 0 767 046 wird eine blasgeformte Flasche mit einer maximalen Wanddicke von 0,17 mm beschrieben. Die Herstellung erfolgt in einem einstufigen Blasverfahren. Die Blasformung erfolgt bei einer Temperatur des Vorformlings oberhalb der Glastemperatur.

Innerhalb der Vorrichtung zur Blasformung können die Vorformlinge sowie die geblasenen Behälter mit Hilfe unterschiedlicher Handhabungseinrichtungen transportiert werden. Bewährt hat sich insbesondere die Verwendung von Transportdornen, auf die die Vorformlinge aufgesteckt werden. Die Vorformlinge können aber auch mit anderen Trageinrichtungen gehandhabt werden. Die Verwendung von Greifzangen zur Handhabung von Vorformlingen und die Verwendung von Spreizdornen, die zur Halterung in einen Mündungsbereich des Vorformlings einführbar sind, gehören ebenfalls zu den verfügbaren Konstruktionen.

Eine Handhabung von Behältern unter Verwendung von Übergaberädern wird beispielsweise in der DE-OS 199 06 438 bei einer Anordnung des Übergaberades zwischen einem Blasrad und einer Ausgabestrecke beschrieben.

Die bereits erläuterte Handhabung der Vorformlinge erfolgt zum einen bei den sogenannten Zweistufenverfahren, bei denen die Vorformlinge zunächst in einem Spritzgußverfahren hergestellt, anschließend zwischengelagert und erst später hinsichtlich ihrer Temperatur konditioniert und zu einem Behälter aufgeblasen werden. Zum anderen erfolgt eine Anwendung bei den sogenannten Einstufenverfahren, bei denen die Vorformlinge unmittelbar nach ihrer spritzgußtechnischen Herstellung und einer ausreichenden Verfestigung geeignet temperiert und anschließend aufgeblasen werden.

Im Hinblick auf die verwendeten Blasstationen sind unterschiedliche Ausführungsformen bekannt. Bei Blasstationen, die auf rotierenden Transporträdern angeordnet sind, ist eine buchartige Aufklappbarkeit der Formträger häufig anzutreffen. Es ist aber auch möglich, relativ zueinander verschiebliche oder andersartig geführte Formträger einzusetzen. Bei ortsfesten Blasstationen, die insbesondere dafür geeignet sind, mehrere Kavitäten zur Behälterformung aufzunehmen, werden typischerweise parallel zueinander angeordnete Platten als Formträger verwendet.

Vor einer Durchführung der Beheizung werden die Vorformlinge typischerweise auf Transportdorne aufgesteckt, die den Vorformling entweder durch die gesamte Blasmaschine transportieren oder die lediglich im Bereich der Heizeinrichtung umlaufen. Bei einer stehenden Beheizung der Vorformlinge derart, daß die Mündungen der Vorformlinge in lotrechter Richtung nach unten orientiert sind, werden die Vorformlinge üblicherweise auf ein hülsenförmiges Halterungselement des Transportdornes aufgesteckt. Bei einer hängenden Beheizung der Vorformlinge, bei der diese mit ihren Mündungen in lotrechter Richtung nach oben orientiert sind, werden in der Regel Spreizdorne in die Mündungen der Vorformlinge eingeführt, die die Vorformlinge festklemmen.

Die Herstellung der Pouches mit zusätzlichen Umhüllungselementen zur Bereitstellung einer ausreichenden Verwendungsstabilität erhöht die Produktionskosten und die nach einer Verwendung der Pouches anfallende Abfallmenge. Darüber hinaus ist beispielsweise bei Pouches, die in Papphüllen eingesetzt sind, die seitliche Verformbarkeit bei einem Transport und einer Lagerung nicht mehr gegeben.

Aufgabe der vorliegenden Erfindung ist es daher, ein Verfahren der einleitend genannten Art derart zu verbessern, daß die Verwendungseigenschaften der Pouches verbessert werden.

Diese Aufgabe wird durch die Merkmale des Anspruchs 1 gelöst.

Weitere Aufgabe der vorliegenden Erfindung ist es, einen Pouch der einleitend genannten Art derart zu konstruieren, daß verbesserte Verwendungseigenschaften bereitgestellt werden.

Diese Aufgabe wird durch die Merkmale des Anspruchs 13 gelöst.

Durch die Kombination der blastechnischen Herstellung des Pouches aus einem spritzgegossenen Vorformling, der Dimensionierung der Wandstärke sowie der Konturgebung des verschlossenen Bodens wird eine hohe Verwendungsqualität des derart produzierten Pouches gewährleistet. Der Pouch kann hierdurch ohne seitliche Schweißnähte hergestellt werden, weist eine ausreichende seitliche Verformbarkeit zur Unterstützung einer kompakten Lagerung und eines kompakten Transportes auf und kann durch die entsprechende Bodenkontur trotzdem im Bereich von Verkaufsstätten oder bei einer Benutzung freistehend positioniert werden. Ein Pouch mit derartigen Eigenschaften konnte bislang nicht hergestellt werden und stellt eine deutliche Verbesserung der vorhandenen Behälterkonstruktionen dar.

Eine Verbesserung der Verformbarkeit läßt sich dadurch erreichen, daß der Pouch mit einer mittleren Wandstärke von höchstens 0,15 mm geformt wird.

Eine typische Dimensionierung besteht darin, daß der Pouch mit einem Volumen von höchstens einem Liter geformt wird.

Eine typische Produktgestaltung wird dadurch definiert, daß eine Volumenvergrößerung des Pouches durch den Befüllvorgang mindestens 10% bezogen auf das Ausgangsvolumen beträgt.

Die Bereitstellung geringer Wandstärken wird dadurch unterstützt, daß der Pouch mit einem Gewicht von höchstens 15 Gramm geformt wird.

Insbesondere erweist es sich als vorteilhaft, daß ein Vorformling mit einer Wandstärke von höchstens 2,5 mm blastechnisch in den Behälter umgeformt wird.

Eine Verkürzung der Prozeßzeit der blastechnischen Herstellung läßt sich dadurch erreichen, daß der Pouch mit einem Blasdruck von höchstens 20 bar hergestellt wird.

Die Kosten der Durchführung des Blasvorganges können dadurch vermindert werden, daß der Blasvorgang unter Verwendung eines einzigen Versorgungsdruckes durchgeführt wird.

Die Standsicherheit des Pouches kann dadurch verbessert werden, daß der Boden des Pouches mit einer Innenwölbung geformt wird.

Darüber hinaus trägt es zu einer Verbesserung der Standsicherheit bei, daß der Boden des Pouches mit einem Standring geformt wird.

Eine hohe Stabilität im Bodenbereich kann dadurch unterstützt werden, daß der Boden aus einer Mehrzahl vom Standring in Richtung auf ein Bodenzentrum verlaufender Konturelemente ausgebildet wird.

Eine Stapelbarkeit liegender Pouches wird dadurch unterstützt, daß der Pouch mit einer in einer horizontalen Schnittebene ovalen Grundkontur geformt wird.

Ein Kompromiß zwischen einer Konturstabilität im stehenden Zustand und einer Verformbarkeit im liegenden Zustand wird dadurch bereitgestellt, daß der Pouch im Bereich der Seitenwandung mit einer Oberflächenkontur zur Stabilisierung geformt wird.

In den Zeichnungen sind Ausführungsbeispiele schematisch dargestellt. Es zeigen:
- Fig. 1: Eine perspektivische Darstellung einer Blasstation zur Herstellung von Behältern aus Vorformlingen,
- Fig. 2: einen Längsschnitt durch eine Blasform, in der ein Vorformling gereckt und expandiert wird,
- Fig. 3: eine Skizze zur Veranschaulichung eines grundsätzlichen Aufbaus einer Vorrichtung zur Blasformung von Behältern,
- Fig. 4: eine modifizierte Heizstrecke mit vergrößerter Heizkapazität,
- Fig. 5: eine Seitenansicht eines blastechnisch hergestellten Pouches,
- Fig. 6: eine Seitenansicht gemäß Blickrichtung VI in Fig. 5,
- Fig. 7: eine Seitenansicht eines weiteren Pouches und
- Fig. 8: eine Seitenansicht gemäß Blickrichtung VIII in Fig. 7.

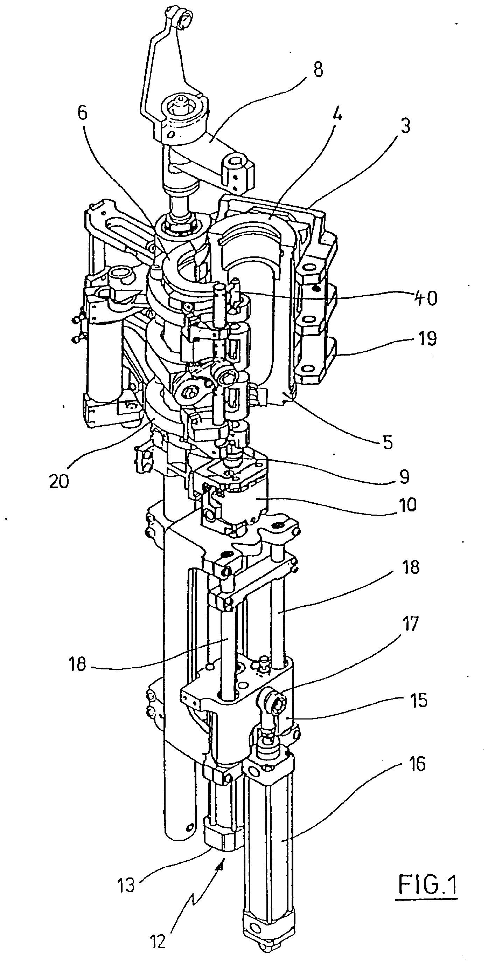

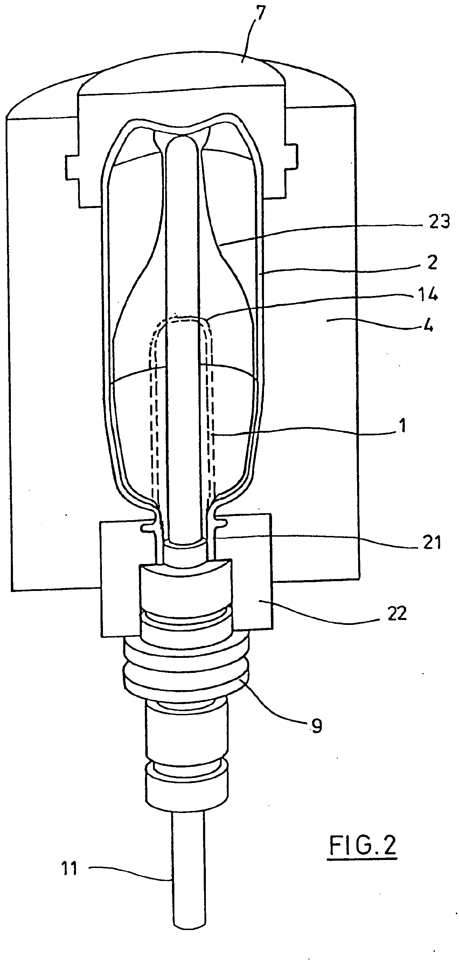

Der prinzipielle Aufbau einer Vorrichtung zur Umformung von Vorformlingen (1) in Behälter (2) ist in Fig. 1 und in Fig. 2 dargestellt.

Die Vorrichtung zur Formung des Behälters (2) besteht im wesentlichen aus einer Blasstation (3), die mit einer Blasform (4) versehen ist, in die ein Vorformling (1) einsetzbar ist. Der Vorformling (1) kann ein spritzgegossenes Teil aus Polyethylenterephthalat sein. Zur Ermöglichung eines Einsetzens des Vorformlings (1) in die Blasform (4) und zur Ermöglichung eines Herausnehmens des fertigen Behälters (2) besteht die Blasform (4) aus Formhälften (5, 6) und einem Bodenteil (7), das von einer Hubvorrichtung (8) positionierbar ist. Der Vorformling (1) kann im Bereich der Blasstation (3) von einem Transportdorn (9) gehalten sein, der gemeinsam mit dem Vorformling (1) eine Mehrzahl von Behandlungsstationen innerhalb der Vorrichtung durchläuft. Es ist aber auch möglich, den Vorformling (1) beispielsweise über Zangen oder andere Handhabungsmittel direkt in die Blasform (4) einzusetzen.

Zur Ermöglichung einer Druckluftzuleitung ist unterhalb des Transportdornes (9) ein Anschlußkolben (10) angeordnet, der dem Vorformling (1) Druckluft zuführt und gleichzeitig eine Abdichtung relativ zum Transportdorn (9) vornimmt. Bei einer abgewandelten Konstruktion ist es grundsätzlich aber auch denkbar, feste Druckluftzuleitungen zu verwenden.

Eine Reckung des Vorformlings (1) erfolgt bei diesem Ausführungsbeispiel mit Hilfe einer Reckstange (11), die von einem Zylinder (12) positioniert wird. Gemäß einer anderen Ausführungsform wird eine mechanische Positionierung der Reckstange (11) über Kurvensegmente durchgeführt, die von Abgriffrollen beaufschlagt sind. Die Verwendung von Kurvensegmenten ist insbesondere dann zweckmäßig, wenn eine Mehrzahl von Blasstationen (3) auf einem rotierenden Blasrad angeordnet sind

Bei der in Fig. 1 dargestellten Ausführungsform ist das Recksystem derart ausgebildet, daß eine Tandem-Anordnung von zwei Zylindern (12) bereitgestellt ist. Von einem Primärzylinder (13) wird die Reckstange (11) zunächst vor Beginn des eigentlichen Reckvorganges bis in den Bereich eines Bodens (14) des Vorformlings (1) gefahren. Während des eigentlichen Reckvorganges wird der Primärzylinder (13) mit ausgefahrener Reckstange gemeinsam mit einem den Primärzylinder (13) tragenden Schlitten (15) von einem Sekundärzylinder (16) oder über eine Kurvensteuerung positioniert. Insbesondere ist daran gedacht, den Sekundärzylinder (16) derart kurvengesteuert einzusetzen, daß von einer Führungsrolle (17), die während der Durchführung des Reckvorganges an einer Kurvenbahn entlang gleitet, eine aktuelle Reckposition vorgegeben wird. Die Führungsrolle (17) wird vom Sekundärzylinder (16) gegen die Führungsbahn gedrückt. Der Schlitten (15) gleitet entlang von zwei Führungselementen (18).

Nach einem Schließen der im Bereich von Trägern (19, 20) angeordneten Formhälften (5, 6) erfolgt eine Verriegelung der Träger (19, 20) relativ zueinander mit Hilfe einer Verriegelungseinrichtung (20).

Zur Anpassung an unterschiedliche Formen eines Mündungsabschnittes (21) des Vorformlings (1) ist gemäß Fig. 2 die Verwendung separater Gewindeeinsätze (22) im Bereich der Blasform (4) vorgesehen.

Fig. 2 zeigt zusätzlich zum geblasenen Behälter (2) auch gestrichelt eingezeichnet den Vorformling (1) und schematisch eine sich entwickelnde Behälterblase (23).

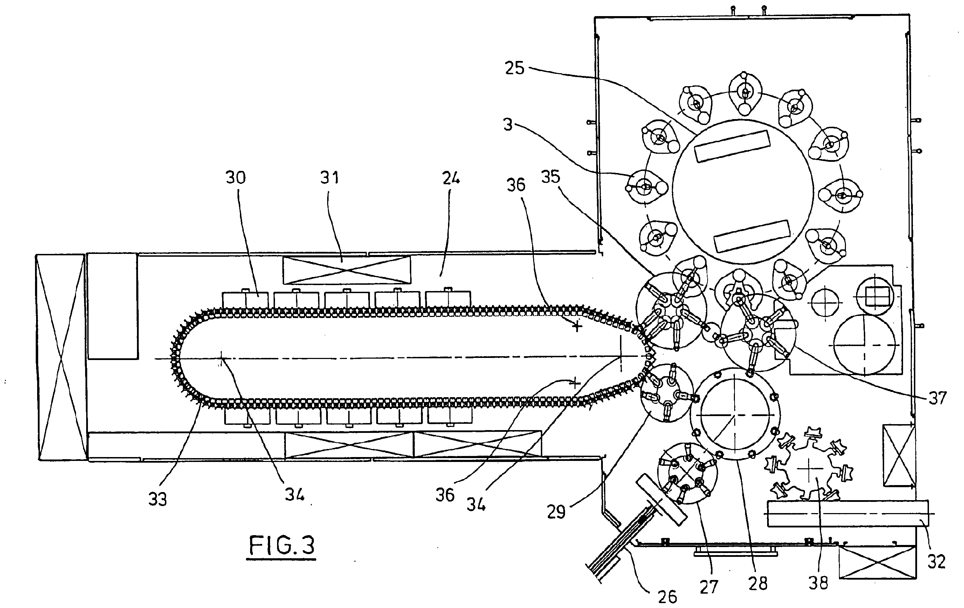

Fig. 3 zeigt den grundsätzlichen Aufbau einer Blasmaschine, die mit einer Heizstrecke (24) sowie einem rotierenden Blasrad (25) versehen ist. Ausgehend von einer Vorformlingseingabe (26) werden die Vorformlinge (1) von Übergaberädern (27, 28, 29) in den Bereich der Heizstrecke (24) transportiert. Entlang der Heizstrecke (24) sind Heizelement (30) sowie Gebläse (31) angeordnet, um die Vorformlinge (1) zu temperieren. Nach einer ausreichenden Temperierung der Vorformlinge (1) werden diese an das Blasrad (25) übergeben, in dessen Bereich die Blasstationen (3) angeordnet sind. Die fertig geblasenen Behälter (2) werden von weiteren Übergaberädern einer Ausgabestrecke (32) zugeführt.

Um einen Vorformling (1) derart in einen Behälter (2) umformen zu können, daß der Behälter (2) Materialeigenschaften aufweist, die eine lange Verwendungsfähigkeit von innerhalb des Behälters (2) abgefüllten Lebensmitteln, insbesondere von Getränken, gewährleisten, müssen spezielle Verfahrensschritte bei der Beheizung und Orientierung der Vorformlinge (1) eingehalten werden. Darüber hinaus können vorteilhafte Wirkungen durch Einhaltung spezieller Dimensionierungsvorschriften erzielt werden.

Als thermoplastisches Material können unterschiedliche Kunststoffe verwendet werden. Einsatzfähig sind beispielsweise PET, PEN oder PP.

Die Expansion des Vorformlings (1) während des Orientierungsvorganges erfolgt durch Druckluftzuführung. Die Druckluftzuführung ist in eine Vorblasphase, in der Gas, zum Beispiel Preßluft, mit einem niedrigen Druckniveau zugeführt wird und in eine sich anschließende Hauptblasphase unterteilt, in der Gas mit einem höheren Druckniveau zugeführt wird. Während der Vorblasphase wird typischerweise Druckluft mit einem Druck im Intervall von 10 bar bis 25 bar verwendet und während der Hauptblasphase wird Druckluft mit einem Druck im Intervall von 25 bar bis 40 bar zugeführt.

Aus Fig. 3 ist ebenfalls erkennbar, daß bei der dargestellten Ausführungsform die Heizstrecke (24) aus einer Vielzahl umlaufender Transportelemente (33) ausgebildet ist, die kettenartig aneinandergereiht und entlang von Umlenkrädern (34) geführt sind. Insbesondere ist daran gedacht, durch die kettenartige Anordnung eine im wesentlichen rechteckförmige Grundkontur aufzuspannen. Bei der dargestellten Ausführungsform werden im Bereich der dem Übergaberad (29) und einem Eingaberad (35) zugewandten Ausdehnung der Heizstrecke (24) ein einzelnes relativ groß dimensioniertes Umlenkrad (34) und im Bereich von benachbarten Umlenkungen zwei vergleichsweise kleiner dimensionierte Umlenkräder (36) verwendet. Grundsätzlich sind aber auch beliebige andere Führungen denkbar.

Zur Ermöglichung einer möglichst dichten Anordnung des Übergaberades (29) und des Eingaberades (35) relativ zueinander erweist sich die dargestellte Anordnung als besonders zweckmäßig, da im Bereich der entsprechenden Ausdehnung der Heizstrecke (24) drei Umlenkräder (34, 36) positioniert sind, und zwar jeweils die kleineren Umlenkräder (36) im Bereich der Überleitung zu den linearen Verläufen der Heizstrecke (24) und das größere Umlenkrad (34) im unmittelbaren Übergabebereich zum Übergaberad (29) und zum Eingaberad (35). Alternativ zur Verwendung von kettenartigen Transportelementen (33) ist es beispielsweise auch möglich, ein rotierendes Heizrad zu verwenden.

Nach einem fertigen Blasen der Behälter (2) werden diese von einem Entnahmerad (37) aus dem Bereich der Blasstationen (3) herausgeführt und über das Übergaberad (28) und ein Ausgaberad (38) zur Ausgabestrecke (32) transportiert.

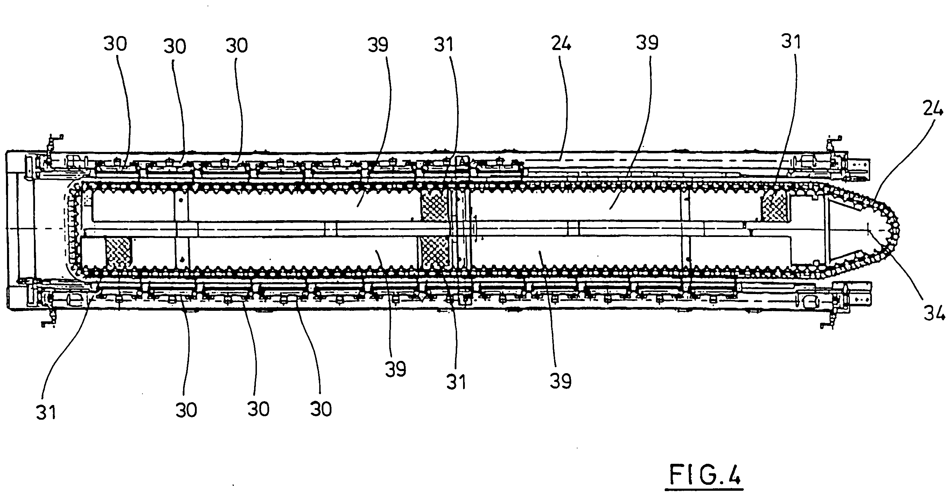

In der in Fig. 4 dargestellten modifizierten Heizstrecke (24) können durch die größere Anzahl von Heizelementen (30) eine größere Menge von Vorformlingen (1) je Zeiteinheit temperiert werden. Die Gebläse (31) leiten hier Kühlluft in den Bereich von Kühlluftkanälen (39) ein, die den zugeordneten Heizelementen (30) jeweils gegenüberliegen und über Ausströmöffnungen die Kühlluft abgeben. Durch die Anordnung der Ausströmrichtungen wird eine Strömungsrichtung für die Kühlluft im wesentlichen quer zu einer Transportrichtung der Vorformlinge (1) realisiert. Die Kühlluftkanäle (39) können im Bereich von den Heizelementen (30) gegenüberliegenden Oberflächen Reflektoren für die Heizstrahlung bereitstellen, ebenfalls ist es möglich, über die abgegebene Kühlluft auch eine Kühlung der Heizelemente (30) zu realisieren.

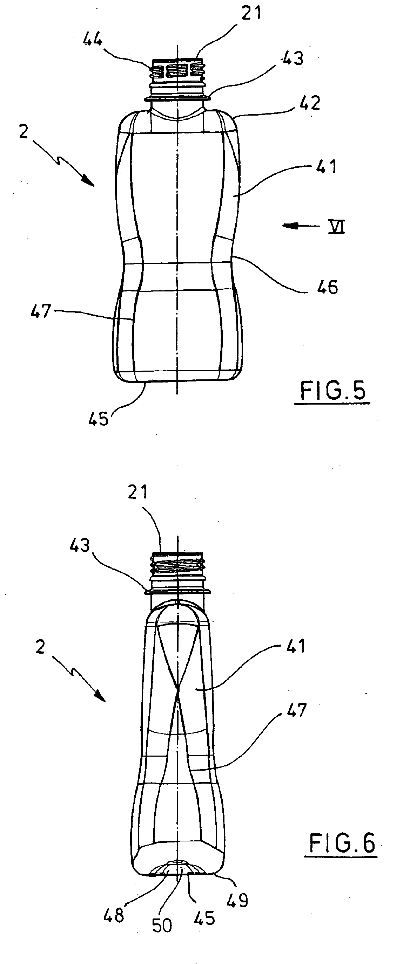

Fig. 5 zeigt eine Seitenansicht eines als Pouch ausgebildeten Behälters (2). Der Behälter (2) ist mit einer Seitenwandung (41) und einem die Seitenwandung (41) in den Mündungsabschnitt (21) überleitenden Schulterbereich (42) versehen. Der Mündungsabschnitt (21) weist einen dem Schulterbereich (42) zugewandt angeordneten Stützring (43) sowie ein Gewinde (44) auf, das typischerweise als Außengewinde ausgebildet und zur Befestigung einer Verschlußkappe vorgesehen ist. Darüber hinaus weist der Behälter (2) einen dem Mündungsabschnitt (21) gegenüberliegend angeordneten geschlossenen Boden (45) auf.

Gemäß dem Ausführungsbeispiel in Fig. 5 besitzt die Seitenwandung (41) eine Taillierung (46) und eine Oberflächenkontur (47) im Bereich der Seitenwandung (41), die in Kombination mit der Konturgebung des Bodens (45) dem Pouch selbststehende Eigenschaften verleiht.

Aus der im Bereich des Bodens (45) geschnittenen Seitenansicht gemäß Fig. 6 ist zu erkennen, daß der Boden (45) eine Innenwölbung (48) aufweist, die von einem Standring (49) umgeben ist. Die Innenwölbung (48) wird durch eine Mehrzahl von Konturelementen (50) stabilisiert.

Typischerweise besitzt die Seitenwandung (41) eine Wandstärke von höchstens 0,2 mm, bevorzugt von höchstens 0,15 mm. Ein Volumen des als Pouch ausgebildeten Behälters (2) beträgt vorzugsweise maximal einen Liter, die insbesondere höchstens 0,75 Liter und besonders bevorzugt höchstens 0,5 Liter.

Als Gewicht für den Behälter (2) erweisen sich maximal 15 Gramm als vorteilhaft. Bevorzugt sind maximal 13 Gramm und besonders bevorzugt maximal 11 Gramm.

Zur Herstellung des als Pouch ausgebildeten Behälters (2) wird ein Vorformling (1) verwendet, der im Bereich seiner zylindrischen Seitenwandung eine Wandstärke von höchstens 2,5 mm, bevorzugt höchstens 2,4 mm und besonders bevorzugt höchstens 2,3 mm aufweist.

Hinsichtlich der verfahrenstechnischen Umformung der Vorformlinge (1) in die Behälter (2) erweist sich ein Blasdruck von höchstens 20 bar, bevorzugt von höchstens 17,5 bar und besonders bevorzugt von höchstens 15 bar als vorteilhaft. Insbesondere ist es möglich, auf die Bereitstellung unterschiedlicher versorgungsdrücke bei der blastechnischen Umformung der Vorformlinge (1) in die Behälter (2) zu verzichten und das Blasverfahren basierend auf lediglich einem Versorgungsdruck zu realisieren. Die Blasformung wird somit bevorzugt ohne Verwendung eines Vorblasdruckes realisiert.

Aufgrund der dünnen Wandstärke des als Pouch ausgebildeten Behälters (2) tritt bei einem Befüllen mit dem vorgesehenen Füllgut eine sogenannte Ausbauchung auf. Dieses Ausbauchen unterstützt jedoch eine seitliche Verformung der befüllten Behälters (2). Typischerweise wird eine Kombination der Wandstärke des Behälters (2) mit der Oberflächenstruktur (47) der Seitenwandung (41) derart gewählt, daß die als vorteilhaft angesehene Ausbauchung durch den Befüllvorgang derart dimensioniert ist, daß die Volumenzunahme durch die Ausbauchung mindestens 10% des Volumens des unbefüllten Behälters (2) beträgt.

Der Behälter (2) gemäß Fig. 5 und Fig. 6 besitzt in einer horizontalen Querschnittfläche eine im wesentlichen ovalartige Grundkontur. Fig. 5 zeigt hierbei eine Seitenansicht der breiteren und Fig. 6 eine Seitenansicht der schmaleren Seite. Insbesondere die in Fig. 6 veranschaulichte Oberflächenkontur (47) unterstützt sowohl eine hohe Standstabilität des Behälters (2) als auch eine Verformbarkeit bei einer Stapelung der Behälter (2) derart, daß diese mit den in Fig. 5 zu erkennenden Seitenflächen horizontal aufeinander gestapelt werden.

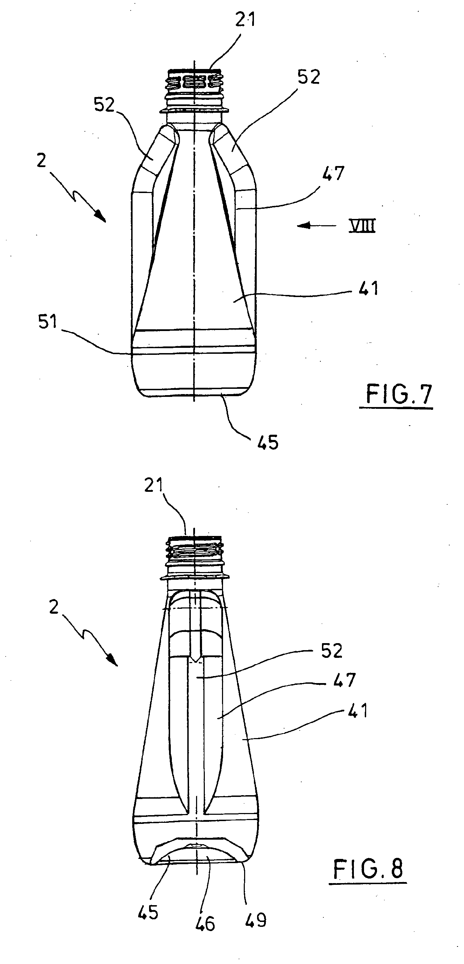

Fig. 7 und Fig. 8 zeigen Seitenansichten einer weiteren Ausführungsform eines als Pouch ausgebildeten Behälters (2). Dieser Behälter (2) weist in einer horizontalen Querschnittebene eine eher runde Grundkontur auf, die sich bei der Ansicht in Fig. 7 in der Zeichnungsebene von unten nach oben verjüngt. Diese Verjüngung ist in Fig. 8 zu erkennen. Darüber hinaus weist die Seitenwandung (41) entsprechend der Darstellung in Fig. 7 ausgehend von einem Sockelbereich (51) in Richtung auf den Mündungsabschnitt (21) verlaufende flügelartige Seitenteile (52) auf, die den Behälter (2) bei der Orientierung in Fig. 7 bei einer seitlich einwirkenden Kraftbelastung stabilisieren und bei einer in Richtung auf die Zeichnungsebene wirkenden Seitenbelastung eine Verformbarkeit des Behälters (2) zulassen.

## Patentansprüche

1. Verfahren zur Herstellung eines Pouches, der einen verschliessbaren Mündungsabschnitt, eine Seitenwandung sowie einen verschlossenen Boden besitzt, wobei ein spritzgegossener Vorformling (1) temperiert und durch einen Blasvorgang derart zu einem Behälter (2) umgeformt wird, dass das Material im Bereich der Seitenwandung (41) biaxial orientiert und mit einer mittleren Wandstärke von höchstens 0,2 mm geformt wird und dass der verschlossene Boden (45) mit einer Kontur derart versehen wird, dass der Pouch selbststehende Eigenschaften aufweist, wobei eine Volumenvergrösserung des Pouches durch einen Befüllvorgang mindestens 10% bezogen auf das Ausgangsvolumen beträgt.

2. Verfahren nach Anspruch 1, **dadurch gekennzeichnet, dass** der Pouch mit einer mittleren Wandstärke von höchstens 0,15 mm geformt wird.

3. Verfahren nach Anspruch 1 oder 2, **dadurch gekennzeichnet, dass** der Pouch mit einem Volumen von höchstens einem Liter geformt wird.

4. Verfahren nach einem der Ansprüche 1 bis 3, **dadurch gekennzeichnet, dass** der Pouch mit einem Gewicht von höchstens 15 Gramm geformt wird.

5. Verfahren nach einem der Ansprüche 1 bis 4, **dadurch gekennzeichnet, dass** ein Vorformling (1) mit einer Wandstärke von höchstens 2,5 mm blastechnisch in den Behälter (2) umgeformt wird.

6. Verfahren nach einem der Ansprüche 1 bis 5, **dadurch gekennzeichnet, dass** der Pouch mit einem Blasdruck von höchstens 20 bar hergestellt wird.

7. Verfahren nach einem der Ansprüche 1 bis 6, **dadurch gekennzeichnet, dass** der Blasvorgang unter Verwendung eines einzigen Versorgungsdruckes durchgeführt wird.

8. Verfahren nach einem der Ansprüche 1 bis 7, **dadurch gekennzeichnet, dass** der Boden (45) des Pouches mit einer Innenwölbung geformt wird.

9. Verfahren nach einem der Ansprüche 1 bis 7, **dadurch gekennzeichnet, dass** der Boden (45) des Pouches mit einem Standring geformt wird.

10. Verfahren nach einem der Ansprüche 1 bis 9, **dadurch gekennzeichnet, dass** der Boden (45) aus einer Mehrzahl vom Standring (49) in Richtung auf ein Bodenzentrum verlaufender Konturelemente (50) ausgebildet wird.

11. Verfahren nach einem der Ansprüche 1 bis 10, **dadurch gekennzeichnet, dass** der Pouch mit einer in einer horizontalen Schnittebene ovalen Grundkontur geformt wird.

12. Verfahren nach einem der Ansprüche 1 bis 11, **dadurch gekennzeichnet, dass** der Pouch im Bereich der Seitenwandung (41) mit einer Oberflächenkontur (47) zur Stabilisierung geformt wird.

13. Pouch, der einen verschliessbaren Mündungsabschnitt, eine Seitenwandung sowie einen verschlossenen Boden besitzt, wobei das Material im Bereich der Seitenwandung (41) durch Blasverformung eines spritzgegossenen Vorformlings (1) biaxial orientiert ist und eine mittlere Wandstärke von höchstens 0,2 mm aufweist, und dass der verschlossene Boden (45) eine Kontur zur Bereitstellung selbststehender Eigenschaften des Pouches aufweist, wobei das Material im Bereich der Seitenwandung (41) eine Elastizität derart aufweist, dass eine Volumenvergrösserung durch einen Befüllvorgang mindestens 10% bezogen auf das Ausgangsvolumen beträgt.

14. Pouch nach Anspruch 13, **dadurch gekennzeichnet, dass** die Seitenwandung (41) eine mittlere Wandstärke von höchstens 0,15 mm aufweist.

15. Pouch nach Anspruch 13 oder 14, **dadurch gekennzeichnet, dass** ein Füllvolumen höchstens 1 Liter beträgt.

16. Pouch nach einem der Ansprüche 13 bis 15, **dadurch gekennzeichnet, dass** ein Gesamtgewicht höchstens 15 Gramm beträgt.

17. Pouch nach einem der Ansprüche 13 bis 16, **dadurch gekennzeichnet, dass** der Vorformling (1) vor seiner blastechnischen Verformung eine Wandstärke von höchstens 2,5 mm aufweist.

18. Pouch nach einem der Ansprüche 13 bis 17, **dadurch gekennzeichnet, dass** die Seitenwandung (41) mit einem Blasdruck von höchstens 20 bar geformt ist.

19. Pouch nach einem der Ansprüche 13 bis 18, **dadurch gekennzeichnet, dass** der Pouch mit einem einzigen Versorgungsdruck blasgeformt ist.

20. Pouch nach einem der Ansprüche 13 bis 19, **dadurch gekennzeichnet, dass** der Boden (45) mit einer Innenwölbung geformt ist.

21. Pouch nach einem der Ansprüche 13 bis 19, **dadurch gekennzeichnet, dass** der Boden (45) mit ei nem Standring geformt ist.

22. Pouch nach einem der Ansprüche 13 bis 21, **dadurch gekennzeichnet, dass** der Boden (45) eine Mehrzahl ausgehend vom Standring (49) in Richtung auf ein Bodenzentrum verlaufender Konturelemente (50) aufweist.

23. Pouch nach einem der Ansprüche 13 bis 22, **dadurch gekennzeichnet, dass** der Pouch in einer horizontalen Querschnittfläche eine im wesentlichen ovale Grundkontur aufweist.

24. Pouch nach einem der Ansprüche 13 bis 23, **dadurch gekennzeichnet, dass** die Seitenwandung (41) mit einer Oberflächenkontur (47) geformt ist.

## Claims

1. A method for the production of a pouch which has a closable mouth section, a side wall as well as a closed bottom, wherein an injection-moulded preform (1) is brought to the correct temperature and moulded by a blowing process to obtain a container (2) in such a manner that the material in the region of the side wall (41) is oriented biaxially and is moulded with a mean wall thickness of no more than 0.2 mm, and that the closed bottom (45) is provided with a contour in such a manner that the pouch has self-supporting properties, wherein
an increase in volume of the pouch by a filling process is at least 10% in relation to the initial volume.

2. The method in accordance with Claim 1, **characterised in that** the pouch is moulded with a mean wall thickness of no more than 0.15 mm.

3. The method in accordance with Claim 1 or 2, **characterised in that** the pouch is moulded with a volume of no more than one litre.

4. The method in accordance with any one of Claims 1 to 3, **characterised in that** the pouch is moulded with a weight of no more than 15 grammes.

5. The method in accordance with any one of Claims 1 to 4, **characterised in that** a preform (1) having a wall thickness of no more than 2.5 mm is formed to obtain the container (2) by blowing.

6. The method in accordance with any one of Claims 1 to 5, **characterised in that** the pouch is produced at a blowing pressure of no more than 20 bar.

7. The method in accordance with any one of Claims 1 to 6, **characterised in that** the blowing process is carried out using a single supply pressure.

8. The method in accordance with any one of Claims 1 to 7, **characterised in that** the bottom (45) of the pouch is moulded with an internal curvature.

9. The method in accordance with any one of Claims 1 to 7, **characterised in that** the bottom (45) of the pouch is moulded with a stand ring.

10. The method in accordance with any one of Claims 1 to 9, **characterised in that** the bottom (45) is formed from a plurality of contour elements (50) extending from the stand ring (49) towards a bottom centre.

11. The method in accordance with any one of Claims 1 to 10, **characterised in that** the pouch is moulded with a basic contour which is oval in a horizontal sectional plane.

12. The method in accordance with any one of Claims 1 to 11, **characterised in that** the pouch is moulded with a surface contour (47) in the region of the side wall (41) for stabilisation reasons.

13. A pouch having a closable mouth section, a side wall as well as a closed bottom, wherein the material in the region of the side wall (41) is oriented biaxially by blow forming an injection-moulded preform (1) and has a mean wall thickness of no more than 0.2 mm, and that the closed bottom (45) has a contour for providing self-supporting properties of the pouch, wherein the material in the region of the side wall (41) has such an elasticity that an increase in volume by a filling process is at least 10% in relation to the initial volume.

14. The pouch in accordance with Claim 13, **characterised in that** the side wall (41) has a mean wall thickness of no more than 0.15 mm.

15. The pouch in accordance with Claim 13 or 14, **characterised in that** a filling volume is no more than 1 litre.

16. The pouch in accordance with any one of Claims 13 to 15, **characterised in that** a total weight is no more than 15 grammes.

17. The pouch in accordance with any one of Claims 13 to 16, **characterised in that** the preform (1) has a wall thickness of no more than 2.5 mm before it is moulded by blowing.

18. The pouch in accordance with any one of Claims 13 to 17, **characterised in that** the side wall (41) is moulded at a blowing pressure of no more than 20 bar.

19. The pouch in accordance with any one of Claims 13 to 18, **characterised in that** the pouch is blow-moulded at a single supply pressure.

20. The pouch in accordance with any one of Claims 13 to 19, **characterised in that** the bottom (45) is moulded with an internal curvature.

21. The pouch in accordance with any one of Claims 13 to 19, **characterised in that** the bottom (45) is moulded with a stand ring.

22. The pouch in accordance with any one of Claims 13 to 21, **characterised in that** the bottom (45) has a plurality of contour elements (50) extending from the stand ring (49) towards a bottom centre.

23. The pouch in accordance with any one of Claims 13 to 22, **characterised in that** the pouch has an essentially oval basic contour in a horizontal cross-sectional area.

24. The pouch in accordance with any one of Claims 13 to 23, **characterised in that** the side wall (41) is moulded with a surface contour (47).

## Revendications

1. Procédé de fabrication de poches dotées d'une section d'embouchure obturable ainsi que d'une paroi latérale et d'un fond fermé, une préforme (1) moulée par injection étant tempérée puis transformée par un processus de soufflage en un récipient (2) de façon telle qu'au niveau de la paroi latérale (41) le matériau soit formé avec une orientation biaxiale et une épaisseur de paroi moyenne de 0,2 mm au maximum et que le fond fermé (45) soit doté d'un contour tel que la poche présente des caractéristiques lui permettant de se maintenir debout, une augmentation de volume de la poche par suite d'un processus de remplissage étant d'au moins 10 % par rapport au volume initial.

2. Procédé selon la revendication 1, **caractérisé en ce que** la poche est formée avec une épaisseur de paroi moyenne de 0,15 mm au maximum.

3. Procédé selon la revendication 1 ou 2, **caractérisé en ce que** la poche est formée avec un volume d'un litre au maximum.

4. Procédé selon l'une des revendications 1 à 3, **caractérisé en ce que** la poche est formée avec un poids de 15 grammes au maximum.

5. Procédé selon l'une des revendications 1 à 4, **caractérisé en ce qu'**une préforme (1) avec une épaisseur de paroi de 2,5 mm au maximum est transformée par soufflage en récipient (2).

6. Procédé selon l'une des revendications 1 à 5, **caractérisé en ce que** la poche est produite par une pression de soufflage de 20 bars au maximum.

7. Procédé selon l'une des revendications 1 à 6, **caractérisé en ce que** le processus de soufflage est exécuté au moyen d'une pression d'alimentation unique.

8. Procédé selon l'une des revendications 1 à 7, **caractérisé en ce que** le fond (45) de la poche est formé avec un bombé intérieur.

9. Procédé selon l'une des revendications 1 à 7, **caractérisé en ce que** le fond (45) de la poche est formé avec un anneau de maintien.

10. Procédé selon l'une des revendications 1 à 9, **caractérisé en ce que** le fond (45) est formé par une pluralité d'éléments de contour (50) allant de l'anneau de maintien vers le centre du fond.

11. Procédé selon l'une des revendications 1 à 10, **caractérisé en ce que** la poche est formée avec une section horizontale présentant un contour ovale.

12. Procédé selon l'une des revendications 1 à 11, **caractérisé en ce que** la poche est formée avec un contour superficiel (47) de stabilisation au niveau de la paroi latérale (41).

13. Poche dotée d'une section d'embouchure obturable, d'une paroi latérale et d'un fond fermé, le matériau au niveau de la paroi latérale (41) ayant, suite au moulage par soufflage d'une préforme (1) moulée par injection, une orientation biaxiale et une épaisseur de paroi moyenne de 0,2 mm au maximum et le fond fermé (45) étant doté d'un contour tel que la poche présente des caractéristiques lui permettant de se maintenir debout, le matériau au niveau de la paroi latérale (41) présentant une élasticité telle qu'une augmentation de volume par suite d'un processus de remplissage soit d'au moins 10 % par rapport au volume initial.

14. Poche selon la revendication 13, **caractérisée en ce que** la paroi latérale (41) présente une épaisseur de paroi moyenne de 0,15 mm au maximum.

15. Poche selon la revendication 13 ou 14, **caractérisée en ce que** le volume de remplissage est de 1 litre au maximum.

16. Poche selon l'une des revendications 13 à 15, **caractérisée en ce que** le poids total est de 15 grammes au maximum.

17. Poche selon l'une des revendications 13 à 16, **caractérisée en ce que** la préforme (1) présente, avant son moulage par soufflage, une épaisseur de paroi de 2,5 mm au maximum.

18. Poche selon l'une des revendications 13 à 17, **caractérisée en ce que** la paroi latérale (41) est formée avec une pression de soufflage de 20 bars au maximum.

19. Poche selon l'une des revendications 13 à 18, **caractérisée en ce que** la poche est moulée par soufflage avec une pression d'alimentation unique.

20. Poche selon l'une des revendications 13 à 19, **caractérisée en ce que** le fond (45) est formé avec un bombé intérieur.

21. Poche selon l'une des revendications 13 à 19, **caractérisée en ce que** le fond (45) est formé avec un anneau de maintien.

22. Poche selon l'une des revendications 13 à 21, **caractérisée en ce que** le fond (45) présente une pluralité d'éléments de contour (50) allant de l'anneau de maintien (49) vers le centre du fond.

23. Poche selon l'une des revendications 13 à 22, **caractérisée en ce que** la poche présente une section transversale horizontale de contour essentiellement ovale.

24. Poche selon l'une des revendications 13 à 23, **caractérisée en ce que** la paroi latérale (41) est formée avec un contour superficiel (47).
